# EUROPEAN PATENT APPLICATION

(11) **EP 2 521 082 A2**
(43) Date of publication of application: **07.11.2012**
(21) Application number: 12166699.4
(22) Date of filing: 03.05.2012
(51) Int. Cl.: G06Q 30/02, G06Q 20/38

(54) **Digital coupon clearinghouse**

(30) Priority: 03.05.2011 US 201113100219
(71) Applicant: Coupons.com Incorporated, Mountain View, CA 94043 (US)
(72) Inventor: Gernaat, Russell, Redwood City, CA California 94061 (US); Carrillo, Roy, San Jose, CA California 95118 (US); Biafore, Michael A, Crystal Lake, IL Illinois 60012 (US)
(74) Representative: Morrall, Jonathan Ian McLachlan

(57) **Abstract**

A coupon distributor receives, from coupon provider(s), data describing coupon offer(s). The coupon distributor operates a server that causes approved source(s) to generate coupons for the offer(s). The server receives, over a network, from a retailer, coupon redemption data indicating that the retailer accepted a particular coupon. In response, the server determines whether the particular coupon was generated by an approved source and that the particular coupon was accepted in a manner consistent with the offer amount and terms. The server further determines whether the server has previously caused any retailer to be compensated for accepting the particular coupon. In response to positive determinations, the server marks the particular coupon as redeemed and further causes the retailer to be credited for the particular coupon. In an embodiment, a retail server causes a digital coupon to be generated for an offer during the same transaction in which the coupon is used.

## Description

### TECHNICAL FIELD

Embodiments generally relate to digital coupons and/or digitally-based clearinghouses for coupons of any form.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

In general, a coupon is a certificate or other document that entitles its holder to accept an offer described or referenced by the coupon. The offer, also subsequently referred to as the "coupon offer," may be any type of offer, but is in general an offer by the coupon provider to provide a customer with one or more goods or services at a typically discounted price, or to provide the customer with a gift in exchange for the performance of an act, such as purchasing a good or service. A coupon often takes a "hard copy" form, such as a paper certificate, with printed images and/or text describing terms of the offer. The process of the user accepting a coupon offer by presenting, referencing, or otherwise providing a coupon while purchasing, contracting, or otherwise transacting with another party is "redeeming" the coupon. For example, a customer may redeem a hard copy of a coupon by handing the copy to a clerk during a purchase at a retail store. The clerk may then provide the user with the offered discounted price or gift.

Recent distribution techniques now provide customers with opportunities to print their own coupons. For example, a number of websites provide search engines or catalogs with which users may locate offers and then print coupons for the offers they find. Some of these websites may use mechanisms to control the number of times that a given offer is printed by a customer, by a device, and/or in aggregate. The printed coupons may be used in the same manner as any other coupon.

Other recent distribution techniques involve creating digital coupons. One such technique involves creating unique digital coupons that may be saved to an account associated with the user, such as a store loyalty account. The user may redeem such digital coupons during online or physical transactions by presenting an account identifier, such as a store loyalty card or an oral identification of the user's telephone number, for the associated account. Another such technique involves creating unique digital coupons that may be stored on a computing device. The digital coupons may be transmitted from the computing device to a point-of-sale during a transaction using any of a variety of mechanisms. For example, information about the digital coupon may be uploaded to the point-of-sale during an online transaction involving the computing device. As another example, information about the digital coupon may be transmitted wirelessly from a smartphone to a receiving component coupled to a checkout register during a transaction at a brick-and-mortar store.

Retailers often honor coupon offers made by third-parties other than the retailers by accepting coupons that were generated and distributed by an entity other than the retailers. Retailers accept such third-party coupons based on an understanding that the third-parties will fairly compensate the retailers for doing so. One technique by which retailers obtain reimbursement or compensation for accepting third-party coupons is for the retailer to send the coupons it redeems to clearinghouses. For example, a retailer may collect all of the coupons it redeems over a period of time, such as a day, and mail those coupons to a clearinghouse. The clearinghouse independently verifies the validity of each coupon (e.g. that the coupons are real, or that the coupons are not unauthorized reproductions), and then provides the retailer with appropriate compensation for each valid coupon.

Issues such as verifying coupon authenticity and uniqueness limit the usefulness of coupons and introduce a variety of inefficiencies in the coupon redemption process. Moreover, retailers hesitate to accept some third-party coupons because of issues such as the high potential for customer fraud, particularly in the cases of high-value coupons and online transactions. That is, retailers are often not well equipped to, or even capable of, verifying the authenticity and uniqueness of coupons that the retailers do not themselves distribute, and thus cannot safeguard against accepting a coupon for which a clearinghouse will not provide compensation. Meanwhile, coupon manufacturers hesitate to provide digital coupons because of the risk of fraud on behalf of the customer and/or the retailer.

### BRIEF DESCRIPTION OF THE DRAWINGS

In the drawings:

FIG. 1 is a block diagram illustrating an example system;

FIG. 2 is a flow diagram that illustrates a coupon distribution, redemption, and compensation cycle;

FIG. 3 is a flow diagram that illustrates a method of generating coupons at or in response to requests by a retailer;

FIG. 4 is a flow diagram that illustrates a method of a retail server causing coupon generation via a coupon client; and

FIG. 5 is block diagram of a computer system upon which embodiments of the invention may be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

Embodiments are described herein according to the following outline:
1.0. General Overview
2.0. Structural Overview
   2.1. Coupon Provider / Distributor
   2.2. Coupon server
   2.3. Data Store
   2.4. Client
   2.5. Retailer
   2.6. User Account Identifiers
   2.7. Third-party Clearinghouse
   2.8. Variations and Alternatives
3.0. Functional Overview
   3.1. Coupon Cycle
   3.2. Real-Time Verification of Coupon Authenticity
   3.3. Retailer-Instigated Generation of Coupons
   3.4. Generation of Coupons at Retail Server
   3.5. Generation of Coupons at Coupon Server in Response to a Request from the Retail Server
4.0. Example Implementation Details
   4.1. Digital Coupon Structure
   4.2. Interoperability
   4.3. Example Operation of Clearinghouse Component
   4.4. Coupon Cycle Data Gathering and Reporting
5.0. Implementation Mechanism-Hardware Overview
6.0. Extensions and Alternatives

### 1.0. GENERAL OVERVIEW

Approaches, techniques, and mechanisms are disclosed for coupon distribution, redemption, and clearing using digital clearinghouses and/or involving online retailers who are not the originators of the coupons. According to an embodiment, a coupon distributor receives, from one or more coupon providers, data describing coupon offers. The coupon distributor operates a server that enables or instructs one or more approved sources to generate coupons for the coupon offers. The distributor receives over a network, for example directly or via a clearinghouse, from a retailer that is different from the coupon provider, coupon redemption data indicating that the retailer accepted a particular coupon. In response to receiving the coupon redemption data, the distributor's server determines whether the particular coupon was generated by one of the one or more approved sources. The server further determines whether the server has previously caused any of one or more retailers to be compensated for accepting the particular coupon. In response to determining that the particular coupon was generated by one of the one or more approved sources, and further in response to determining that the server has not previously caused any of the one or more retailers to be compensated for accepting the particular coupon, the server marks the particular coupon as redeemed. The server further causes the retailer to be credited for accepting the particular coupon.

According to an embodiment, a retail server receives, from a coupon server that is different than the retail server, coupon data describing a coupon offer. The retail server receives input from a user selecting at least a particular item. The retail server determines that the coupon offer is eligible for use by the user to purchase the particular item. In response to the user selecting to purchase at least the particular item in a transaction, the retail server causes a digital coupon to be generated for the coupon offer. The retail server does so by performing one of: generating the digital coupon based on the coupon data received from the coupon server, or sending a request configured to cause the coupon server to generate the digital coupon for the coupon offer. The retail server applies the digital coupon to the transaction. The retail server also sends a request for compensation for the digital coupon to a clearinghouse, wherein the clearinghouse is different than the coupon server.

According to an embodiment, a coupon client executes on a user device. The client receives, from a retail server, an instruction to send to a coupon server a request to generate a digital coupon for a coupon offer. The coupon server is different than the retail server. Responsive to the instruction, the client sends to the coupon server the request to generate the digital coupon for the coupon offer. The request to generate the digital coupon includes a unique client identifier.

According to an embodiment, a retail server executes on a first set of one or more computing devices. The retail server is configured to conduct transactions with a client over a network. A coupon distribution server executes on a second set of one or more computing devices. The coupon distribution server is configured to generate coupons for coupon offers that are applied to the transactions. The retail server is further configured to: identify a particular coupon offer to apply to a particular transaction with a particular client, instruct the particular client to request that the coupon distribution server generate a digital coupon for the particular offer, apply the digital coupon to the transaction, and send a unique identifier for the digital coupon either directly or indirectly to a clearinghouse component of the coupon distribution server to request compensation for applying the digital coupon. The coupon distribution server is further configured to: generate a digital coupon, including the unique identifier, for the particular coupon offer in response to the request from the particular client, and provide compensation for the digital coupon upon determining that the unique identifier received from the retail server was generated by the coupon distribution server.

In other aspects, the invention encompasses a computer apparatus and a computer-readable medium configured to carry out the foregoing steps.

### 2.0. STRUCTURAL OVERVIEW

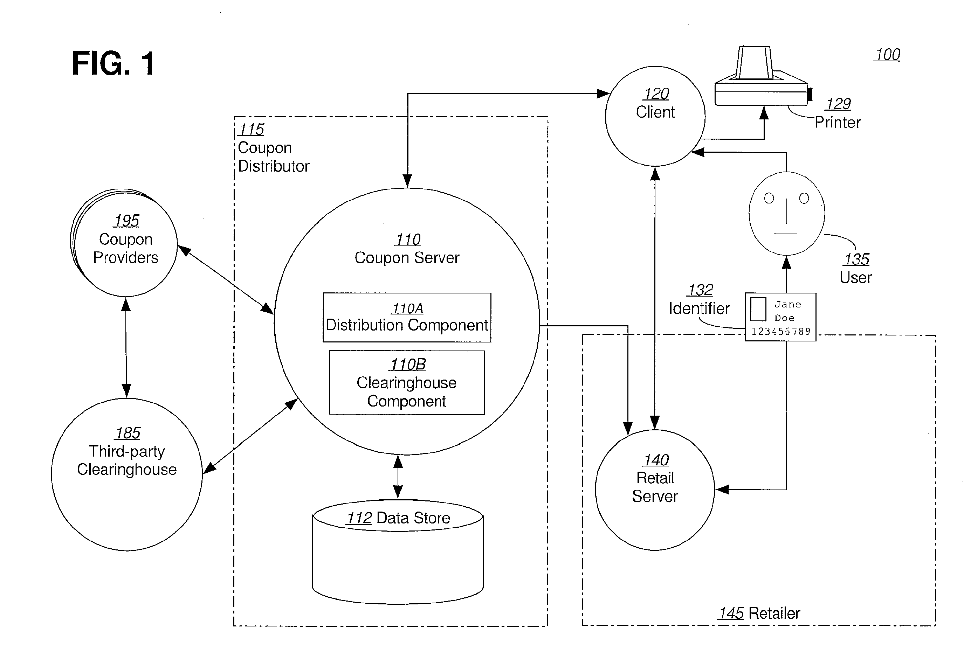

FIG. 1 is a block diagram illustrating an example system 100 in which the techniques described herein may be practiced, according to an embodiment. System 100 comprises a coupon server 110 operated by a coupon distributor 115. The coupon server 110 features a distribution component 110A by which coupon server 110 makes coupon offers available to users, such as user 135, on behalf of one or more coupon providers 195. Coupon server 110 distributes printable coupons for various offers directly to the user 135 via a client 120 coupled to a printer 129 at which the printable coupons may be printed. Coupon server 110 also makes digital coupons for various offers available to the user 135 by means of saving information identifying digital coupons requested by user 135 to one or more accounts associated with user 135. The user 135 may then provide a retailer 145 with an identifier for the account, such as a store loyalty account or user name, so that retailer 145 may retrieve any applicable digital coupons during a transaction. Coupon server 110 also makes digital coupons available to the user 135 indirectly, via retailer 145. For example, in response to a retail server 140, operated by retailer 145, requesting a digital coupon on behalf of user 135, coupon server 110 generates a digital coupon and provides retail server 140 with information about the generated coupon.

Coupon server 110 further includes a clearinghouse component 110B, by which coupon distributor 115 compensates retailer 145 for accepting coupons distributed by coupon server 110. For some coupons, coupon server 110 acts as an agent of other clearinghouse 185. However, for other coupons, coupon server 110 provides compensation directly, acting as a standalone clearinghouse. Unlike conventional clearinghouses, coupon server 110 both distributes coupons to user 135 and compensates retailer 145 for accepting coupons for user 135. This unique configuration allows coupon providers 195, retailer 145, and user 135 to utilize coupons more efficiently with less risk of fraud, because the clearinghouse component 110B of coupon server 110 is able to verify both the uniqueness and the authenticity of a digital coupon.

In one embodiment, coupon server 110 is a special-purpose computer configured with logic that can perform the operations described herein during operation. In an embodiment, coupon server 110 is a general-purpose computer that comprises one or more processors, and memory, mass storage device, or other non-transitory computer-readable storage media storing instructions which, when loaded and executed, cause the one or more processors to perform the operations that are further described herein.

### 2.1. COUPON PROVIDER / DISTRIBUTOR

In an embodiment, coupon distributor 115 is any entity capable of distributing coupons on behalf of a coupon provider 195, such as a manufacturer, retailer, or advertiser. For the purposes of this disclosure, distributing a coupon may refer to either or both of generating a coupon and saving a coupon offer to a user account in association with one or more account identifiers. In this context, generating a coupon may include printing a coupon or creating and storing digital data representing a digital coupon.

A coupon provider 195 may contract with coupon distributor 115 to distribute coupons as part of a coupon campaign. The coupon provider 195 supplies coupon distributor 115 with coupon distribution data describing the coupon offer(s), as well as parameters for each coupon campaign, such as a target number of coupons to distribute in aggregate, how many coupons may be supplied to each individual end user or device, regional distribution limits, a clearinghouse to use for the campaign, and/or start and end dates for distribution. In an embodiment, coupon distributor 115 makes coupon offers available on behalf of multiple coupon providers 195.

Coupon providers 195 may transmit coupon distribution data to coupon distributor 115 electronically via a network connecting coupon provider 195 to coupon server 110. For example, coupon server 110 may feature a web application, file sharing, or database access component by which providers 195 may upload coupon distribution data directly to coupon server 110 or coupon data store 112. Additionally or alternatively, coupon providers 195 may transmit coupon distribution data to coupon distributor 115 by any other suitable means, including orally over a telephone or via an email.

### 2.2. COUPON SERVER

Coupon server 110 is operated by a coupon distributor 115 for, among other purposes, making coupons available to users such as user 135. In an embodiment, a server may refer to one or more applications executing on one or more computers or devices that interact with counterpart client applications executing on other computers or devices. Thus, coupon server 110 may be one or more server applications, executing at one or more computing devices operated by coupon distributor 115. The coupon distribution component 110A and clearinghouse component 110B may each comprise entirely separate computing devices accessible via different addresses and/or networks, or coupon distribution component 110A and clearinghouse component 110B may be logically separated processes that share some or all computing and application resources.

In an embodiment, via distribution component 110A, coupon server 110 facilitates the availability of user-selected coupon offers in transactions with retailer 145 without requiring user 135 to actually present a physical coupon. Rather, coupon server 110 saves information about one or more digital coupons to an identifier that the user may provide in place of a coupon when engaging in a transaction with retailer 145. The coupon server 110 communicates relevant coupon information and identifiers to retail server 140 to facilitate this functionality.

In an embodiment, coupon server 110 distributes coupons directly to retailer 145. For instance, a retail server 140 may send a request to coupon server 110 to generate a digital coupon for user 135. The coupon server 110 may respond by sending an identifier for a unique digital coupon to the retail server 140. In an embodiment, the retailer 145 may then apply the digital coupon directly to a current transaction, without providing the coupon identifier to the user or saving the identifier to the user's account. In an embodiment, coupon server 110 provides retail server 140 with logic and coupon data that collectively allow retail server 140 to generate coupons directly, such as the logic and coupon data that are described in U.S. Application Serial No. 12/821,095, filed June 22, 2010, the entire contents of which are hereby incorporated by reference for all purposes as if fully set forth herein.

In an embodiment, coupon server 110 is further configured for distributing printable coupons to, among other clients, client 120. However, coupon server 110 need not necessarily be capable of distributing coupons via any particular technique described herein.

Coupon server 110 receives and responds to coupon-related requests from client 120 over one or more networks, such as the Internet. Coupon server 110 retrieves coupon data from data store 112 to respond to various requests from client 120. For example, client 120 may request coupon server 110 to provide a listing of available coupons, search for a coupon based on keywords, or save a digital coupon to a user account for user 135. In response, coupon server 110 may retrieve any relevant coupon data from data store 112, process the coupon data as appropriate, and, based on that processing, formulate a response to the client.

Coupon server 110 may be configured to control coupon distribution in a number of ways. For example, coupon server 110 may be configured to deny a client permission to print the coupon, in accordance with device-based, client-based, or aggregate distribution limits. As another example, coupon server 110 may be configured to deny a request to generate a coupon for a user if an equivalent coupon has already been generated from client 120. Coupon server 110 may further be configured to deny a client permission to print a coupon based on geographic information associated with the client.

Coupon server 110 may use distribution logs for sending distribution reports to coupon providers 195. The form of a distribution report may vary, and may include at least data indicating either a total number of coupons that have been distributed for a particular campaign or a total number of coupons that have been distributed for the particular campaign since the last distribution report. Distribution reports may be sent at varying frequencies, and in some embodiments a report may be sent each time a particular coupon is printed. Distribution reports may further include information harvested from device data made known to coupon server, such as geographic information or client types of the devices to which coupons have been distributed.

Via clearinghouse component 110B, coupon server 110 receives compensation requests from retail server 140. Each compensation request reports coupons that have been redeemed by retailer 145 over a certain period of time. For example, compensation requests may report coupons that were redeemed in a daily or weekly time period, since the last compensation request, or during another interval. Coupon server 110 compares coupon identifiers in the compensation requests to coupon identifiers that have been distributed by approved sources, as well as to previous compensation logs. Clearinghouse component 110B may then provide compensation to retailer 145 by transferring appropriate compensation from provider(s) 195 of the redeemed coupon(s) to retailer 145. For instance, clearinghouse component 110B may debit an account for a provider 195 of a redeemed coupon and similarly credit an account belonging to retailer 145.

### 2.3. DATA STORE

Coupon distributor 115 maintains the data supplied by coupon providers 195 as coupon data in data store 112, which is coupled to coupon server 110, and can also be accessed by clearinghouse component 110B. Data store 112 may comprise one or more databases and/or file repositories. The coupon data may take a variety of forms, including database records and/or one or more files. Among other aspects, coupon data may comprise, for each coupon offer, data such as the name of the coupon provider 195 making the coupon offer, distribution parameters, terms of the coupon offer, print layout information and graphics, one or more internal or provider identification numbers, bar code generation information, one or more relevant uniform resource locators (URLs), one or more coupon names or titles, one or more related search terms, clearinghouse information, and one or more related categories. Distribution parameters may include aggregate distribution limit values, per device distribution limit values, per region distribution limit values, and/or per client distribution limit values.

Data store 112 further stores user account data. The user account data includes data for one or more different user accounts, each of which may or may not be mapped to a unique user. Some or all of the user accounts may have been established during a registration process with coupon distributor 110. Some or all of the user accounts may instead have been established with a retailer 145, e.g. during an online or in-store registration process, and the details thereof may have been subsequently communicated by the retailer 145 to coupon distributor 110.

Regardless of how the user accounts came into existence, the user account data specifies one or more account identifiers for each user account. Each account identifier may in turn be associated with data identifying one or more digital coupons that are available to a user. Some or all of the one or more digital coupons may also be associated with other account identifiers associated with the user account. In an embodiment, the digital coupons with which the account identifiers are associated are unique instances of corresponding coupon offers, wherein each unique instance has a unique coupon identifier. For example, just as each coupon that may be printed by coupon server 110 may have a unique coupon number, a unique coupon number may also be generated each time a user saves a digital coupon to the user's account. However, in other embodiments, the digital coupons do not require unique coupon identifiers.

Data store 112 may also store other information related to coupon distribution, including device data and distribution logs. The device data describes a plurality of devices that execute clients for accessing coupon data, such as client 120. Each device may be described by a device identifier. Device data may include information such as hardware identifiers, client identifiers, geographic information, and permissions data. In an embodiment, each device identifier is assigned based on a variety of characteristics of the device, in such a manner as to produce device identifiers that are virtually guaranteed to be unique. In an embodiment, the characteristics from which the device identifier are derived include data that cannot easily be changed, so as to ensure that no single device may print more than its allotted share of coupons simply by changing a network address, data file, computer name, or operating system. In an embodiment, the characteristics from which the device identifiers are derived include hardware identifiers such as serial numbers. Techniques for assigning identifiers are described in, for example, U.S. Patent Publication Number 02010/0124235A1, published May 20, 2010, the contents of which are hereby incorporated by reference for all purposes as if fully set forth herein. In other embodiments, however, a device identifier may in fact be a network address, a Mac address, a computer name, or a unique client identifier that is generated at the time the client is installed.

Distribution logs track the number of coupons that have been distributed for each coupon offer described in the coupon data, including the number of times coupons have been printed and/or the number of times coupon offers have been saved to a user account. Distribution logs may further track how many times each device described in the device data and/or how many times each user described in the user account data has printed coupons for, viewed, and/or saved each coupon offer described in coupon data.

Data store 112 may also store a variety of compensation data. For example, data store 112 may store data indicating, for each coupon, the number of times a retailer 145 has reported the coupon as redeemed. As another example, data store 112 may store balances and account numbers of accounts established by providers 195 from which funds for compensating retailer 145 are to be drawn. Data store 112 may further store account numbers that should be credited in order to provide compensation to retailer 145. Data store 112 may further store a variety of other accounting data.

### 2.4. CLIENT

In an embodiment, client 120 is one or more software applications that provide user 135 with an interface to coupon server 110. Client 120 may execute on any of a variety of devices, including a personal computer, printer, phone, or portable computing device. Client 120 may be, for example, a standalone software application or a plug-in to a web browser. Client 120 need not necessarily be executed by a device that is owned or even exclusively operated by user 135. For example, client 120 may be executed by an in-store kiosk provided to customers by retailer 145.

In one embodiment, client 120 is a special-purpose computer configured with logic that can perform the operations described herein during operation. In an embodiment, client 120 is a general-purpose computer that comprises one or more processors, and memory, mass storage device, or other non-transitory computer-readable storage media storing instructions which, when loaded and executed, cause the one or more processors to perform the operations that are further described herein.

Client 120 communicates with coupon server 110 over a network such as the Internet to receive coupon data. The coupon data sent to client 120 may include, for instance, a listing of information about coupons available to user 135, including offer terms and values, as well as data describing a specific coupon offer in sufficient detail to allow client 120 to print a coupon for the coupon offer at printer 129. Printer 129 is any printing device capable of printing a coupon. Printer 129 may be connected to client 120 via any communication mechanism, or client 120 may be integrated into printer 129.

Client 120 may, using various input or output mechanisms, allow user 135 to view a list of available coupon offers, select a particular coupon offer from that list, and choose whether to print a coupon for the offer, or to save the offer to user 135's account. In response to user 135 selecting the latter option, client 120 may send a request to coupon server 110 to save the selected offer to user 135's account.

In an embodiment, multiple clients 120 may be available to a user, with each client 120 potentially supporting different mechanisms by which the user may access a coupon offer. For example, one client 120 may only allow a user to print coupons via printer 129, another client 120 may only allow a user to save digital coupons to an account, and another client 120 may allow a user to access coupon offers in both ways.

In an embodiment, coupon data and instructions are sent to client 120 from a server at an external website, such as a retail website, instead of coupon server 110. In such an embodiment, client-initiated requests to coupon server 110 may or may not be relayed through such an external website.

In an embodiment, client 120 includes logic for generating a device identifier, as described in the previous section. Client 120 may report this device identifier to coupon server 110 or retail server 140 upon request. Among other purposes, the device identifier may be used by the coupon server 110 for the purpose of enforcing per-device coupon distribution limits.

### 2.5. RETAILER

Retailer 145 is any entity that conducts transactions in which users, such as user 135, redeem coupon offers via the coupons distributed by coupon server 110. User 135 may engage in such transactions with retailer 145 at, for example, a brick-and-mortar store or an online website operated by retailer 145. A transaction as used herein refers to the act of a retailer such as retailer 145 obtaining payment for the provision of, or the formation of a contract to provide, certain product(s) and/or service(s). Obtaining payment may include receiving a physical or electronic transfer of payment, debiting an account, obtaining a hold on funds, securing funds in escrow, obtaining points or other non-monetary value from an account or escrow or other transfer, or obtaining any form of value from an electronic wallet. A transaction is initiated by a customer's selection of products or services to purchase, followed by the customer's initiation of a checkout process by, for example, clicking on a checkout button or bringing selected products to a checkout register. The checkout process may involve the customer providing the retailer with any information necessary to complete the transaction, such as account or wallet information, billing particulars and/or delivery instructions.

In an embodiment, retailer 145 allows user 135 to redeem a coupon by simply presenting a printed or digital coupon while engaging in an applicable transaction. The retailer then obtains compensation for accepting the coupon by sending the printed coupon or digital coupon to the clearinghouse component 110B, or third party clearinghouse 185. Or, the retailer may simply send a unique identifier printed on a paper coupon, or contained within the redeemed digital coupon to clearinghouse component 110B.

In an embodiment, retailer 145 allows user 135 to redeem a coupon by presenting an identifier while engaging in a transaction. Retail server 140 uses the identifier to locate applicable coupon(s) that have been saved to the user's account. In an embodiment, retail server 140 communicates with coupon server 110 to locate applicable coupon(s) that have been saved to the user's account. In an embodiment, the retail server 140 instead relies upon coupon server 110 to push coupon availability data for various account identifiers to retail server 140. For example, coupon server 110 may periodically provide retail server 140 with a table of account identifiers and newly associated or disassociated digital coupon identifiers. Retail server 140 may then update a local database based on the coupon availability data. Suitable techniques are described, for instance, in U.S. Application Serial No. 12/878,231, filed September 9, 2010, the entire contents of which are hereby incorporated by reference for all purposes as if fully set forth herein.

Retailer 145 periodically, or in response to a transaction, reports coupon usage data to coupon server 110. Coupon usage data indicates the redemption of one or more coupon offers, along with unique identifiers associated with the redemptions, so that coupons may be removed from the redeeming user's account(s).

In an embodiment, retail server 140 comprises executable logic similar to that of coupon distribution component 110A for generating coupons. For example, coupon distributor 115 may provide one or more libraries of coupon distribution code for retailer 145 to utilize in retail server 140. As a condition of executing such logic, retail server 140 is configured to communicate periodically via an application program interface with coupon server 110, via which coupon server 110 provides retail server 140 with the coupon data necessary for retail server 140 to generate coupons. For example, coupon server 110 may provide retail server 140 with terms of coupon offers for which customers of retail server 140 are currently eligible, instructions for generating a unique coupon identifier for each coupon offer, and applicable distribution limits and parameters. Retail server 140 is further configured to report distributions to coupon server 110 on a periodic basis.

In an embodiment, retail server 140 is further configured to periodically request compensation for coupons that have been electronically redeemed by retail server 140 and/or for redeemed coupons whose redemption information has been scanned or manually entered. To this end, retail server 140 sends data indicating the coupon identifier of each coupon redeemed during the period. The data may also include data describing the transaction(s) in which the coupon was redeemed, including one or more of sales price(s), transaction date(s) and time(s), and identifiers of product(s) or service(s) included in each transaction. The periodic requests may occur hourly, daily, or upon a certain number of coupon redemptions, for example. The retail server may send requests directly to the clearinghouse component of the coupon server. The retail server may also or instead send requests indirectly, via a server belonging to a clearinghouse agent or to an original coupon provider. In the case of indirect requests, the request is relayed from the intermediate entity to the clearinghouse component of the coupon server with or without additional processing by the intermediate entity.

In an embodiment, retailer 145 is capable of accepting digital coupons from a provider 195 even though retailer 145 is a separate and distinct entity from the provider 195, coupon distributor 115, and clearinghouse 185. That is, the techniques described herein allow retailer 145 to accept coupons from third-party providers by increasing retailer 145's confidence in receiving compensation for the coupons, even when those coupons are digital. Further, the techniques described herein increase confidence of the provider 195 that coupons will be distributed securely in a provider-approved manner, thus increasing the confidence of the provider 195 that retailer 145 will only accept and request compensation for authentic coupons.

In one embodiment, retail server 140 is a special-purpose computer configured with logic that can perform the operations described herein during operation. In an embodiment, client 120 is a general-purpose computer that comprises one or more processors, and memory, mass storage device, or other non-transitory computer-readable storage media storing instructions which, when loaded and executed, cause the one or more processors to perform the operations that are further described herein. Retailer 145 may be a single store, or a corporation that operates a group of stores for which it collectively reports redemptions. In either event, retailer 145 may be compensated by either of direct payment to an individual store that redeemed the coupon or payment to the parent corporation, depending on business rules that may be established between retailer 145 and coupon distributor 115.

### 2.6. USER ACCOUNT IDENTIFIERS

Account identifier 132 is a series of characters and/or symbols that uniquely identifies user 135 or a user account associated with user 135. For example, account identifier 132 may identify a retailer's loyalty account, a user account with coupon distributor 115, or both. In the latter case, for instance, account identifier 132 may have been created to identify the retailer's loyalty account, but then subsequently registered with the coupon distributor account, along with potentially other identifiers. Account identifier 132 may or may not also identify or be identified from a physical item, such as a card or personal computing device. In an embodiment, the physical item is any portable item that has an account identifier that can be readily accessed during a transaction.

In an embodiment, account identifier 132 is a number for a card account, such as a credit card account or customer loyalty card account. User 135 may provide identifier 132 during a transaction by, for example, scanning the card at a card reader, typing or stating the numbers on the card, or providing personal information by which the card number may be located, such as a telephone number.

In an embodiment, account identifier 132 is a unique device identifier belonging to a portable computing device. Examples include a mobile phone, laptop or netbook computer, tablet computer, personal digital assistant, flash drive, music player, or camera. For example, the device identifier may be a MAC address, Bluetooth address, serial number, randomly assigned number, and so forth. User 135 may provide identifier 132 during a transaction by, for example, allowing the portable device to broadcast identifier 132 wirelessly to the retailer's checkout system, allowing the retailer to scan the device, or allowing the retailer to see or scan information displayed by the device. In an embodiment, identifier 132 does not necessarily correspond to device hardware, but may rather be provided by a software application executing on the device.

In an embodiment, account identifier 132 is emitted wirelessly by a radio-frequency identifying (RFID) chip or any other mechanism capable of transmitting signals that may be detected during a transaction with retailer 145. For example, the RFID chip may be embedded within a card, device, or other item carried by user 135.

In an embodiment, coupon distributor 110 allows user 135 to print account identifier 132, or a barcode representation thereof, on a sheet of paper. The paper may then be presented to the retailer 145 during a transaction. Using this approach, user 135 can take advantage of the techniques described herein without having to remember account identifier 132 and without having to present to the retailer 145 an identifying card or device. The paper may or may not be reusable in different transactions at the same or at a different retailer.

In an embodiment, account identifier 132 may be associated with biometric data that uniquely identifies user 135, such as a fingerprint or a retinal scan. Thus, the user may provide the identifier in an embodiment by allowing a retailer to scan user 135 for the biometric data.

### 2.7. THIRD-PARTY CLEARINGHOUSE

Optionally, coupon distributor 115 acts as an agent for third-party clearinghouse 185. The coupon distributor 115 still compensates retailer 145 directly, but coupon providers 195 maintain their accounts at clearinghouse 185. Thus, coupon distributor 115 forwards data for redeemed coupons to the clearinghouse 185 in any suitable form, including electronically or by mail. Clearinghouse 185 then reimburses coupon distributor 115 from the funds held for coupon provider 195.

### 2.8. VARIATIONS AND ALTERNATIVES

System 100 as shown in FIG. 1 presents only one embodiment in which the techniques described herein may be practiced. Other embodiments may include additional and/or fewer elements, in potentially different arrangements. As an example, any of coupon provider 195, coupon distributor 115, retailer 145, or clearinghouse 185 may be the same entity, and various other components may therefore be omitted. Moreover, printer 129 is not necessary to practice many of the techniques described herein.

### 3.0. FUNCTIONAL OVERVIEW

### 3.1. COUPON CYCLE

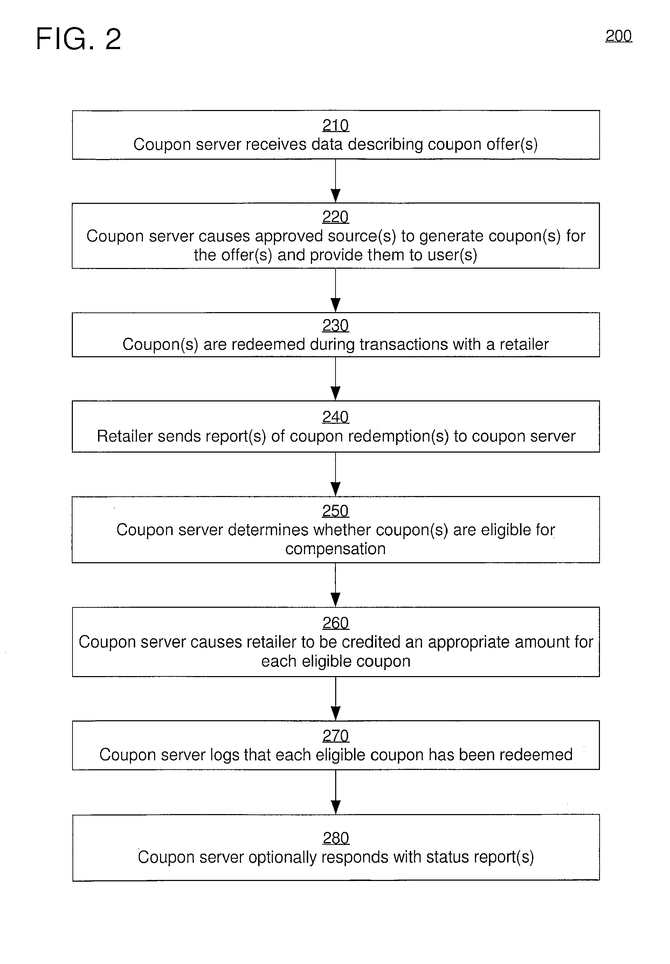

FIG. 2 is a flow diagram 200 that illustrates a coupon distribution, redemption, and compensation cycle, according to an embodiment. Flow 200 is but one example of such a cycle. Other flows may feature fewer or additional elements and/or varying arrangements of the elements described below.

At block 210, a coupon server receives data from a provider describing one or more coupon offers and distribution parameters for the coupon offers, as described elsewhere within this application. The coupon server stores this information for subsequent use. In an embodiment, the provider may also designate a method of compensating retailers for each coupon offer, such as a fund from which to pay retailers, a third-party clearinghouse that will handle payments, and so on.

At block 220, the coupon server causes one or more approved sources to generate coupons for the one or more coupon offers and provides the generated coupons to users. Approved sources may include, for example, the coupon server and/or one or more retail servers. In an embodiment, a source is approved if it adheres to a coupon generation and reporting protocol established by the coupon distributor. Such a protocol may, for instance, require that the source generate only unique coupons, issue coupon identifiers that conform with algorithm(s) established by the distributor, enforce distribution limits, report all distributions to the coupon server, and/or correctly respond to various prescribed instructions from the coupon server.

In an embodiment, a coupon is generated in response to a user utilizing a client to request that an approved source provide the user with a coupon for a specific offer that was listed or otherwise displayed by the client. In an embodiment, a coupon is generated in response to a request that was triggered by other events, such as the start of a new month, a request from a retailer or a provider, detection of the user being in proximity to a certain device or location, detection of certain types of transactions, and so on. In any event, the approved source of a coupon may enforce distribution limits when deciding whether to generate a coupon for a user. In an embodiment, enforcement of distribution limits may require that the client send the approved source a device identifier that has been calculated by the coupon client.

The approved sources may generate coupons using any suitable technique, including distributing printable coupons to client applications, generating digital coupons, and saving coupons to user accounts. In an embodiment, each generated coupon is identified by a unique coupon identifier.

At block 230, at least some the generated coupons are redeemed during transactions with a retailer. The transactions may occur at a brick-and-mortar store, or via a web-based application such as an online store or mobile application. The redemption process involves at least some of the users providing the coupons to the retailer during the transactions. The coupons may be provided in a variety of ways. For example, a customer may physically hand a coupon to the retailer. As another example, a customer may provide the retailer with an identifier, such as a loyalty card or phone number, by which the retailer may locate an identifier for a coupon that has been saved to the user's account. As another example, a customer may electronically transfer a digital coupon from a portable electronic device. In response to the provision of a coupon, the retailer applies any corresponding coupon offer(s) to the transactions.

At block 240, the retailer sends one or more reports of coupon redemptions to the coupon server, or a clearinghouse component thereof. Each report includes the identifiers of one or more redeemed coupons along with data describing the transaction(s) in which the reported coupons were redeemed. The retailer may report each redeemed coupon separately, or the retailer may batch redeemed coupons together, so that, for example, each report contains information about a predefined number of coupons, pertains to a specific time period (e.g. an hour or a day), or requests a certain amount of compensation.

In an embodiment, each report is transmitted electronically over a network such as the Internet, thus avoiding the need to print a paper record of the coupon even when the coupon is digital to begin with. For example, each report may be emailed to the coupon distributor or uploaded to repository belonging to the coupon distributor. Reports may be transmitted directly to the coupon server, or indirectly via an intermediary such as a clearinghouse agent.

At block 250, for each particular coupon identified in the one or more reports of block 240, the coupon server, or a clearinghouse component thereof, determines whether the coupon is eligible for compensation. The eligibility determination may involve determining whether the particular coupon is authentic, in that the particular coupon was actually generated by the coupon server or an approved source. Authenticity may be established in a variety of manners, including looking up the coupon identifier for the particular coupon in a log, stored at the coupon server, of coupon identifiers corresponding to previously generated coupons. The eligibility determination may also involve determining whether the particular coupon is unique, in that neither the retailer nor any other retailer has previously reported the particular coupon as redeemed. Uniqueness may be established by looking up the coupon identifier for the particular coupon in a log, stored at the coupon server, of coupon identifiers corresponding to coupons that have previously been reported as redeemed. In an embodiment, the particular coupon is eligible for compensation if it is both authentic and unique.

In an embodiment, the eligibility determination may also involve a variety of other factors, including whether the particular coupon was redeemed in an eligible transaction. Determination of an eligible transaction may involve, for instance, comparing coupon terms such as eligible products, dates, and stores, to the transaction details corresponding to the particular coupon. As another example of a factor in the eligibility determination, the retailer may determine whether adequate funds exist to compensate the retailer for the particular coupon. If adequate funds do not exist, the coupon server may be configured to allow the retailer to submit the particular coupon for compensation again at a later date.

In an embodiment, the eligibility determination need not necessarily involve all or any of the factors described in this section.

In an embodiment, the eligibility determination may also take into account business rules. For example, one business rule may stipulate that lack of uniqueness or authenticity is tolerated under certain conditions, based on the identity of the retailer, the retailer type, the nature of the transaction, the identity of the coupon, the financial value of the coupon, and/or the frequency with which such exceptions have occurred relative to a predefined time period. Such rules may be designed to prevent relatively minor disputes that could occasionally arise as a result of distributor, provider, or retailer errors.

At block 260, the coupon server causes the retailer to be credited an appropriate amount of compensation for each eligible coupon. The amount of compensation per coupon may be specified in initial coupon terms received from the coupon provider. The amount of compensation for a redeemed coupon need not necessarily be the same as the amount of the discount given to the user for redeeming the coupon, but can be.

The coupon server may cause the retailer to be credited in any suitable manner, such as triggering a transfer of money to an account designated by the retailer, or triggering a mailing of a payment to the retailer. In an embodiment, the coupon server directly or indirectly causes the retailer to be credited with money from an account held by the coupon distributor. Such an account may be funded by the coupon provider on a periodic or as-needed basis. Such an account may instead be funded directly by the coupon distributor, and the coupon distributor may in turn request reimbursement from the provider or another clearinghouse for which the distributor acts as an agent.

In an embodiment, the coupon server causes the retailer to be compensated by sending requests to relevant providers or third-party clearinghouses to send the calculated compensation to the retailer. In an embodiment, the coupon distributor sends payment to the retailer, but only after requesting and receiving payment from the provider or a designated clearinghouse.

At block 270, the coupon server logs that each eligible coupon has been redeemed.

At block 280, the coupon server optionally responds to each report of block 250 with status data for each reported coupon, including whether each coupon was eligible for compensation, how much compensation will or has been provided for each eligible coupon, and an explanation of why any coupon was determined to be ineligible.

### 3.2. REAL-TIME VERIFICATION OF COUPON AUTHENTICITY

In an embodiment, a retailer may submit a coupon to the coupon server for real-time verification of the coupon's eligibility for compensation prior to accepting the coupon in a transaction. In such embodiments, after the user has provided a coupon, the retailer may send a verification request comprising the coupon's identifier. For example, the retailer's online store may be configured to automatically send such a request in response to receiving a coupon identifier from a user during a checkout process. Or, a register at retailer's store may be configured to scan the coupon identifier from a barcode, and send a request to the coupon server either directly or via a retail server. Or, a clerk at the retailer's store may read the coupon identifier from the coupon and provide it to an automated or human-based phone verification service that utilizes the coupon server.

The coupon server may perform any or all of the checks described above with respect to block 260. Based on these checks, the coupon server responds to the request with an indication of whether the coupon server will compensate the retailer for accepting the coupon. The coupon server may even indicate the amount of compensation, so that the retailer may utilize such information to decide whether to accept the coupon. In an embodiment, the coupon server may, in response to a verification request, mark the coupon as reserved, so that the coupon may not be used at or claimed by another retailer. The coupon server may also place a hold on funds to compensate the retailer for the coupon, so that the retailer can be assured that compensation funds will not be depleted. Both the reservation on the coupon and the hold on the funds may be temporary, in case the transaction does not complete successfully, or is not reported.

### 3.3. RETAILER-INSTIGATED GENERATION OF COUPONS

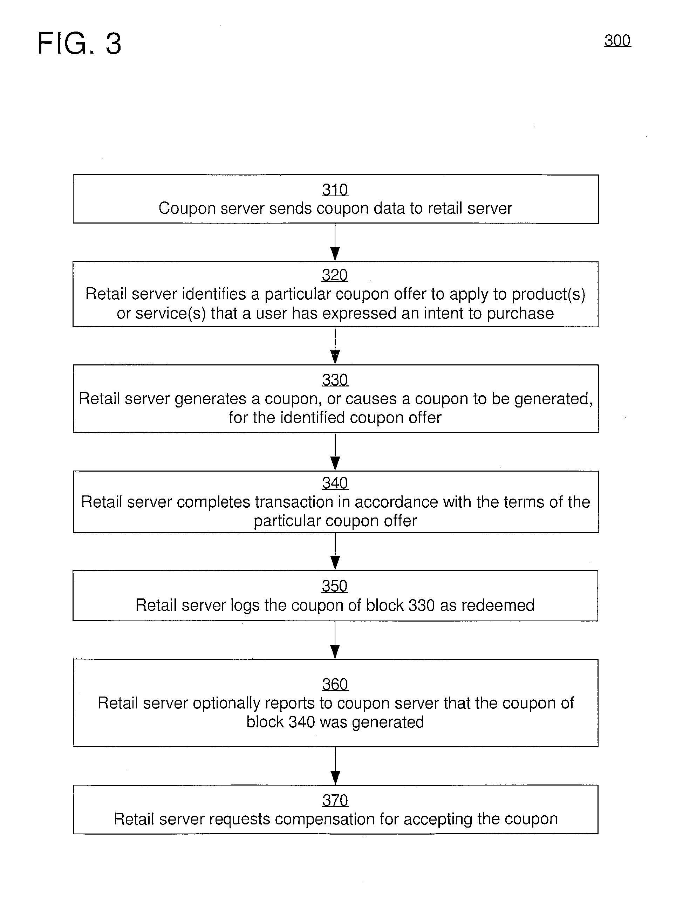

FIG. 3 is a flow diagram 300 that illustrates a method of generating coupons at or in response to requests by a retailer, according to an embodiment. Flow 300 is but one example of such a method. Other methods may feature fewer or additional elements and/or varying arrangements of the elements described below.

At block 310, a coupon server operated by a coupon distributor sends coupon data to a retail server operated by a retailer. The data may be sent in any suitable form, such as via standard format feeds published by a coupon server or via API calls by a retail server to a coupon server. The coupon data includes data describing a set of coupon offers that are available for use in transactions involving the retail server. The coupon data may include, for example, terms and distribution parameters for each of a plurality of coupon offers. The coupon data may be sent in a single communication. Or, the coupon data may be sent in multiple communications over a period of time. For example, the coupon server may send an initial set of available coupon offers, and then provide updates over time. Updates may be provided on a periodic basis, as coupon availability changes, or in response to requests from the retail server. The updates may be cumulative to previous coupon data, or the updates may replace the previous coupon data entirely. In an embodiment, the coupon server sends the coupon data in response to a query by the retail server that lists specific items or services, such as items that are in a customer's shopping cart.

In an embodiment, the coupon data includes information about every coupon offer currently available to the coupon server. In an embodiment, the coupon server selects a subset of coupon offers to indicate as available to the retail server. The coupon server selects the subset based on information from the provider of each coupon offer and/or information from the retailer. For example, the coupon server may select only coupon offers that are not expired or whose relevant distribution limits have not been surpassed. As another example, the coupon server may select only coupon offers that may be used to purchase items currently sold by the retailer, or even items involved in a current transaction with the retailer. As another example, the coupon server may have received distribution parameters indicating that a particular offer cannot be redeemed in transactions involving the retailer. Accordingly, the coupon data would not describe the particular offer.

In an embodiment, the coupon data includes one or more distribution limits to be enforced by the retail server, such as limiting the number of times a coupon offer may be used in a transaction, by each customer, over a certain time period, or at the retailer. Such limits may have been specified explicitly by the provider of the offer, or may be calculated by the server in such manner as to ensure that the relevant distribution limits are not surpassed, or to ensure that the supply of coupons is not exhausted all at once. The coupon server may reset the limits as needed.

In an embodiment, per-transaction and per-customer limits are implied. In an embodiment, the coupon server relies upon a mandated reporting protocol to ensure that relevant distribution limits are not surpassed by an excessive amount. That is, the coupon server may require the retail server to report the number of coupons that it has generated on a periodic basis or at defined times. The coupon server may then determine whether any relevant distribution limits have been surpassed and/or are in danger of being surpassed. The coupon server may then send updated coupon availability data to the retail server.

At block 320, the retail server identifies a particular coupon offer to apply to one or more products or services for which a user has expressed intent to purchase. The customer may express intent to purchase, for example, by adding the one or more products or services to a physical or online shopping cart. As another example, the customer may express such intent to purchase by clicking on a "purchase now" button. As yet another example, the customer may express such intent to purchase by bringing a product to a register, or by clicking on a "checkout" button in a shopping cart. Block 320 may occur at any time after a customer has selected item(s) or service(s) specified in the terms of the coupon offer, even after the customer has expressed final consent for a transaction. Once the particular coupon offer has been identified, the retail server may show, in association with a checkout process or shopping cart, a discounted final price that reflects application of the coupon offer. Or, the retail server may simply discount the price when obtaining payment.

Identifying the coupon offer may involve comparing the selected products and services to sets of eligible products and services that are listed for some or all coupon offers in the coupon data of block 310. For example, if a customer has added item A to his or her shopping cart, and the retail server had received information from the coupon server describing an offer 1 for item A, the retail server could automatically identify offer 1 as an offer that may be applied to the customer's potential transaction. In an embodiment, the retail server automatically identifies a coupon offer as applicable to product(s) or service(s) selected by a customer, as long as the product(s) or service(s) meet the terms and conditions of the coupon offer. In an embodiment, the retail server may first inform the customer that the coupon offer is available, for example, at the time the customer adds the product to a cart or initiates the checkout process. The retail server then waits to determine whether the particular coupon offer is to be applied based on whether the customer confirms that the customer wishes to apply the coupon offer. For example, the retail server may require that the customer confirm that the customer wishes to apply the coupon offer by checking a confirmation box at some point in a checkout process.

In an embodiment, identification of the particular coupon offer to apply occurs at least partly in response to one or more actions by the customer prior to the customer initiating the checkout process. For example, in order for the retail server to identify the coupon offer as being available, the customer may be required to perform such actions as visiting a promotional web page at the retailer's website, including certain parameter(s) in a query string when visiting the retailer's website, or entering a certain promotional code. The customer may take such actions in response to a wide variety of promptings. For instance, the customer may arrive at an appropriate URL by clicking on a link in an email, text message, advertisement from the retailer, or listing of the relevant product on the retailer's website. The retail server may record that a customer took such action(s) using any suitable technique, such as via cookies and/or sessions. Subsequently, when identifying coupon offers that are available for selected item(s) or service(s), the retail server may check to see if a record of the required action exists.

In an embodiment, identification of the particular coupon offer is pre-conditioned upon the customer's standing with the retailer. For example, the retail server may only identify the coupon offer as available if the customer has paid a membership fee, established a user account with the retailer, made a certain number of past purchases, and/or bought certain number(s) or type(s) of items, been selected randomly or according to other eligibility criteria, or became eligible for an incentive or award. In an embodiment, the likelihood of the customer purchasing a product without a coupon may also be taken into consideration to determine whether or not to offer a customer a particular coupon offer.

In an embodiment, identification of the particular coupon offer may further involve evaluation of distribution parameters included in the coupon data from the coupon server, including distribution limits and offer terms. For example, the retail server may be configured to only provide a customer the opportunity to redeem a coupon offer once per each retailer user account. As another example, the retail server may check to ensure that the user's current shopping cart involves a prerequisite amount of money, as specified in the offer terms.

At block 330, the retail server generates a coupon, or causes a coupon to be generated, for the identified coupon offer. The retail server may generate a coupon using a variety of techniques, including those discussed throughout this application. The retail server may generate the coupon directly, based on algorithm(s) supplied by the coupon distributor and/or logic similar to that of the coupon server. Alternatively, the retail server may request that the coupon server generate a coupon, either directly or indirectly via a customer's coupon client. These options are described in detail in subsequent sections.

In either event, coupon generation entails generating a coupon identifier. Depending on the nature of the coupon, generation may further involve the creation of a digital structure representing the coupon or even a printed coupon. However, in an embodiment, a coupon is generated simply by producing a unique coupon identifier.

In an embodiment, coupon generation does not occur until the customer has given consent to engage in a transaction involving the selected product(s) or service(s), to reduce the likelihood or eliminate failure to redeem the coupon. However, in other embodiments a coupon may be generated well in advance of the customer consenting to the transaction. In fact, a coupon may be generated even prior to block 320, and held by the server for use in a subsequent transaction for which the particular coupon offer is identified as available.

In an embodiment, the coupon is generated in such a manner that the customer does not have an opportunity to apply the coupon to any other transaction. This may mean, for example, that the customer is not given any information, such as a coupon identifier, that identifies the coupon in such a way that the customer could provide the coupon in another transaction. As another example, this may mean that the coupon is not saved to an account from which it may be retrieved for use in more than one transaction. In this manner, the retailer (and coupon provider) may be assured that the user can use only a single copy of the coupon, and that the copy will be authentic.

At block 340, the retail server completes the transaction in accordance with the terms of the particular coupon offer. In an embodiment, completing the transaction may actually include generating the coupon per block 330. In other embodiments, block 340 occurs before or after block 330. In an embodiment, the retail server waits to generate the coupon until after the transaction has been completed so as not to generate coupons that may not be redeemed.

At block 350, the retail server logs the coupon of block 330 as redeemed. This block may occur as part of block 340, in response to block 340, or, in the event that performance of block 330 is conditioned upon completion of block 340, during or upon completion of block 330. This block may instead be implicit in situations where coupons are guaranteed to be generated only if a transaction involving the coupon will occur.

At block 360, if the retail server generated the coupon directly, the retail server optionally reports to the coupon server that the coupon of block 340 was generated. In an embodiment, the retail server performs this block even if the coupon is never applied to a transaction. This block may be performed at any time relative to the other blocks, as long as it occurs during or after coupon generation. The retail server may perform this block once for each coupon it generates, or may report generated coupons together in batched reports.

At block 370, the retail server requests compensation for accepting the coupon, as in block 240 of FIG. 2. Flow may then proceed as in blocks 250-280 of FIG. 2. In an embodiment, block 370 may be combined with block 360, in that the retail server sends a single report that indicates both coupons that have been generated and coupons that have been redeemed. For instance, the report may include separate data for distributions and redemptions. Or, the fact that a coupon has been distributed may be implied from the fact that it has been redeemed.

### 3.4. GENERATION OF COUPONS AT RETAIL SERVER

In an embodiment, once a retail server has received coupon data such as described with respect to block 310, the retail server generates coupons by itself, without further interaction with the coupon server. For instance, the retail server may be configured to execute a process that generates a unique coupon identifier based on the coupon data the retail server received from the coupon server. Such a process may be public, contained in code provided to the retailer by the retail server, or stated in the coupon data. The process may involve one or more identifiers that singly, or in combination, uniquely differentiate a coupon offer from other coupon offers, such as an offer identifier, provider identifier, and/or product identifier. The process may further be a function of an identifier that is unique to the retailer, or the process may differ depending on the retailer. The process may further be a function of a combination of one or more factors that the retail server can guarantee will be unique for each coupon it generates, such as a customer identifier, transaction identifier, date, time, client identifier, and/or sequence number.

In an embodiment, the process simply involves appending the relevant information in a predetermined order. For instance, the coupon identifier may take the form of an offer identifier followed by a retailer identifier followed by a user identifier followed by a user-specific sequence number. In an embodiment, the process may be more complicated, involving any variety of mathematical functions.

In an embodiment, the retail server may include logic for generating a digital coupon structure, or even a printed coupon. However, the retail server need not be capable of generating a coupon in any specific form.

### 3.5. GENERATION OF COUPONS AT COUPON SERVER IN RESPONSE TO A

### REQUEST FROM THE RETAIL SERVER

### DIRECT REQUESTS TO THE COUPON SERVER

In an embodiment, the retail server causes a coupon to be generated by sending a request to the coupon server. The retail server includes information identifying the coupon offer for which the coupon is to be generated. The request may also include a variety of other information, such as a retailer identifier, a user identifier, or an indication of product(s) or service(s) involved in a transaction or potential transaction in which the coupon will be used. The coupon server determines whether to provide the retailer with a coupon based on the provided information using any suitable technique, including those described herein. If the coupon server determines to provide the retailer with a coupon, the coupon server generates the coupon and sends the coupon, a printable image of the coupon, and/or a coupon identifier to the retail server. The coupon identifier may be generated using the same techniques as described in the previous section.

### VIA A COUPON CLIENT

In an embodiment, the retail server causes a coupon to be generated by communicating with a client deployed on a customer's computing device, such as a personal computer, mobile phone, tablet, or personal digital assistant. Such a client may have been provided to the customer for instance, via a downloadable installer, or may have come pre-installed on the computing device. The client may be, for instance, a standalone client that accepts communication from the retail server over a designated port. As another example, the client may be a plugin to another application, such as an ActiveX control or Java applet. The retail server communicates with the plugin via instructions to the application that cause the application to invoke the plugin. In an embodiment, the client is a plugin to the same application that the customer uses to transact with the retail server, such as a plugin to the web browser.

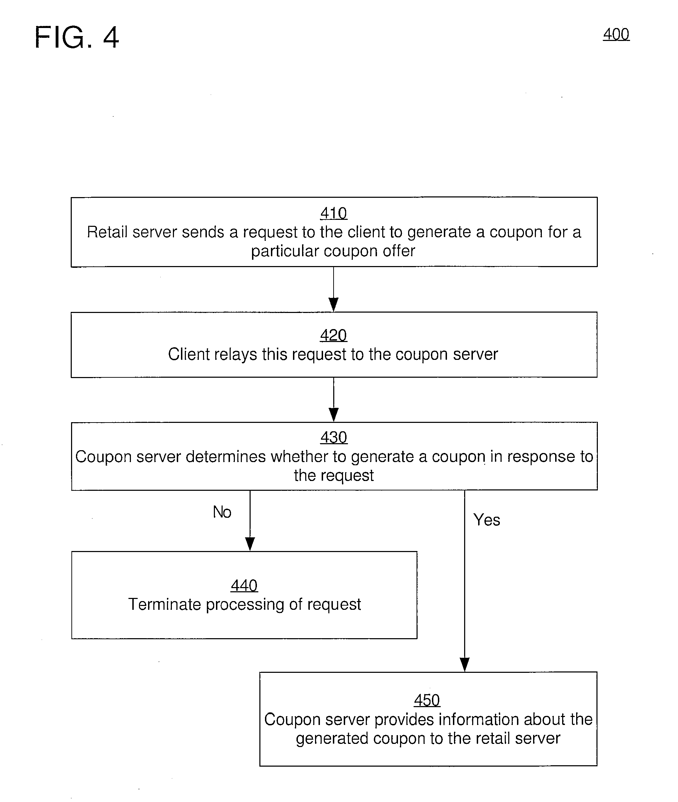

FIG. 4 is a flow diagram 400 that illustrates a method of a retail server causing coupon generation via a coupon client, according to an embodiment. Flow 400 is but one example of such a method. Other methods may feature fewer or additional elements and/or varying arrangements of the elements described below.

At block 410, a retail server sends a request to the client to generate a coupon for a particular coupon offer. At block 420, the client relays this request to the coupon server. The relayed request includes with the request the device identifier for the device at which the client is executing. The device identifier may have been calculated by the client in accordance with any suitable technique, such as those described herein.

At block 430, the coupon server determines whether to generate a coupon in response to the request. The determination of block 430 may involve, for instance, looking up the device identifier in a coupon distribution log to determine whether a per-device distribution limit has been surpassed for the coupon offer. The determination may further involve other considerations as discussed herein.

At block 440, if the coupon server determines not to generate a coupon, processing of the request terminates. The coupon server may optionally relay through the client a response indicating that no coupon may be generated for this particular customer for this particular offer at this particular time. The response may further indicate why the coupon could not be generated.

At block 450, if the coupon server determines to generate a coupon, the coupon server provides information about the generated coupon to the retail server. The coupon server may relay the information through the client, or the coupon server may send the information directly to the retail server. The information may include an identifier for the coupon. The information may further include the terms of the offer or even a digital coupon. The information may instead include information by which the retail server may retrieve the coupon from the coupon server.

### IMPLICATIONS FOR CLEARINGHOUSE COMPONENT

In an embodiment, the retail server need not necessarily return information about the generated coupon to the coupon server. Rather, the retail server may simply indicate whether a coupon was successfully generated. The retail server's initial request in such an embodiment may have included a transaction identifier. The retail server may later transmit the transaction identifier to the coupon server to request compensation. The coupon server may use this transaction identifier to confirm that a coupon was in fact generated.

In an embodiment, the request to the coupon server may include information about a transaction to which the coupon offer has already been applied. Thus, the request may double as a request for compensation for the coupon.

### 4.0. EXAMPLE IMPLEMENTATION DETAILS

### 4.1. DIGITAL COUPON STRUCTURE

In an embodiment, generated coupons may adhere to a digital coupon structure. Among other elements, the structure may include some or all of an offer identifier, unique coupon identifier, GS 1 databar, UPC, EAN, clearinghouse, and provider identifier. Field(s) containing information about redemption, such as store location or time and date, may also be set at the time of redemption. A digital coupon with such information may be transmitted to the coupon server for the purpose of requesting compensation. The digital coupon may be formatted using any suitable convention, including plain text or XML. The digital coupon may also be encrypted.

### 4.2. INTEROPERABILITY

In an embodiment, the clearinghouse module may be operated by an entity other than the entity that operates the coupon server. This separate clearinghouse module may be configured to communicate with the coupon server in order to determine the authenticity of a coupon. The retail server may use the same clearinghouse module to request compensation for all redeemed coupons, or may direct compensation requests to different clearinghouse modules depending upon clearinghouse information in the digital coupons or associated with the corresponding coupon offers. A retail server may also work with coupons distributed by multiple coupon servers.

In an embodiment, a digital coupon, or even a coupon identifier, may be generated in accordance with an open and/or well-understood structure, such as that described above. The exact structure is not important, so long as it contains information from which a clearinghouse server and/or the retail server may identify the originating coupon server. For example, each digital coupon may include a common field identifying the coupon distributor by name (or any other identifier). The clearinghouse server may have access to a mapping of the name of the distributor to an address of the distributor's coupon server. The clearinghouse server may thus identify the coupon server with which it should communicate to determine the authenticity and/or uniqueness of the coupon.

### 4.3. EXAMPLE OPERATION OF CLEARINGHOUSE COMPONENT

In an embodiment, each report of coupon redemptions that a retailer uploads is a single file (e.g. a zip file of digital coupons, a CSV log, etc.). The file name may adhere to a common naming convention, such as <SUBMITTER>-<YYYYMMDD>-<HHMMSS>.xml. In an embodiment, the file is a CSV file formatted such that each row in the CSV file represents one offer, each row in the CSV file must have a unique serial number, and each row in the CSV file must have complete digital coupon data. The retailer uploads the reports to a shared FTP site periodically. The clearinghouse module checks the site at a certain frequency, such as every thirty minutes. The clearinghouse module verifies each reported instance of coupon redemption, and combines compensation for all verified redemptions into a single voucher for payment for each retailer for each day. A voucher may also be specific to a coupon provider or even a particular coupon campaign, if desired for accounting or other purposes. A voucher may or may not be reviewed by a human operator. In an embodiment, the voucher is reviewed by a human operator only if the retailer requested compensation for certain coupon identifiers found on an exception list. Upon review, or if no review is required, the clearinghouse component further generates an invoice based on the voucher. The invoice is sent to the coupon provider(s) of the redeemed coupons. The invoice may be specific to the voucher, or may include information about other vouchers. Once appropriate payment has been received from the coupon provider(s), the voucher is then processed for payment (for example, sending a check, EFT, or other value transfer to the retailer)..

### 4.4. COUPON CYCLE DATA GATHERING AND REPORTING

A coupon server that functions as both a distributor and a clearinghouse is uniquely situated to collect, aggregate, and report a variety of data concerning the coupon distribution and redemption cycle. In an embodiment, the coupon server logs data when coupon offers are presented to a user-for example, which coupon offers the coupon server displayed in web pages comprised of directories, search results, or advertisements. The coupon server further logs data when the user explicitly expresses interest in a coupon offer by, for instance, clicking on a link for more information. The coupon server further logs data when the user requests a coupon for a particular coupon offer. The coupon server further utilizes a coupon's unique identifier in a report of redeemed coupons to log that the particular coupon has been redeemed. In association with some or all of the above events, the coupon server may log the time at which the event occurred, the user involved, the stores or types of stores involved, the relevant offer and/or coupon identifiers, and a session identifier.

In an embodiment, session identifiers and/or user identifiers may be utilized to correlate any of the logged information. For example, when a user first views a list of coupon offers, a session identifier may be assigned to the user. The user's expressed interests and coupon requests are then logged in association with the session identifier. The session identifier may expire in response to the expiration of time or the occurrence of an exit event such as closing a browser. The session identifier is also correlated to subsequent redemptions of coupon(s) that have unique coupon identifier(s) that were generated in association with the session.

Sessions may be utilized to derive metrics such as the amount of time a user took to express interest in a coupon offer after seeing the coupon offer in a listing, the amount of time the user took to request a coupon after seeing the coupon offer in a listing, and the amount of time the user took to request a coupon after requesting further information about the coupon offer. Such metrics may be correlated, in turn, with whether a user redeemed a coupon offer and/or the amount of time the user took to redeem a coupon for the coupon offer. Inter-offer correlations may also be calculated, such as the percentage of users who looked at a coupon offer A and redeemed coupon offer B.

A coupon distributor may report the metrics and correlations to a provider, retailer, or third-party clearinghouse. These entities may utilize such correlations to evaluate the effectiveness of various coupon campaigns and make adjustments to future campaigns accordingly. In an embodiment, the correlations may be reported to servers belonging to any of these entities. Based on thresholds established with respect to these correlations, the servers at any of these entities and/or the coupon distributor may take automated actions with respect to one or both of the relevant coupon offer(s) and any related coupon offers. Automated actions may include triggering alerts to stores that a certain amount of redemptions of a coupon are expected in the near future, throttling the amount of coupons that are made available for offers that are highly likely to experience high redemptions at a certain period of time, automatically adjusting the value of the coupon based on the rate of coupon generation and/or coupon redemption, requesting advance funds for a clearinghouse, and so on.

Note that requesting a coupon may or may not be a separate event from expressing an interest in a coupon offer. For example, a directory of coupon offers may have separate controls for requesting further information about a coupon and requesting an actual coupon. The separate controls may be displayed simultaneously, or the control for requesting a coupon may only be displayed upon the user requesting further information about an offer. In an embodiment, the time taken between requesting a coupon and redeeming a coupon is still a valuable metric even if the coupon server is unable to log data concerning a user's initial request for a list of offers or the user's initial expression of interest in an offer.

### 5.0. IMPLEMENTATION MECHANISM-HARDWARE OVERVIEW

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

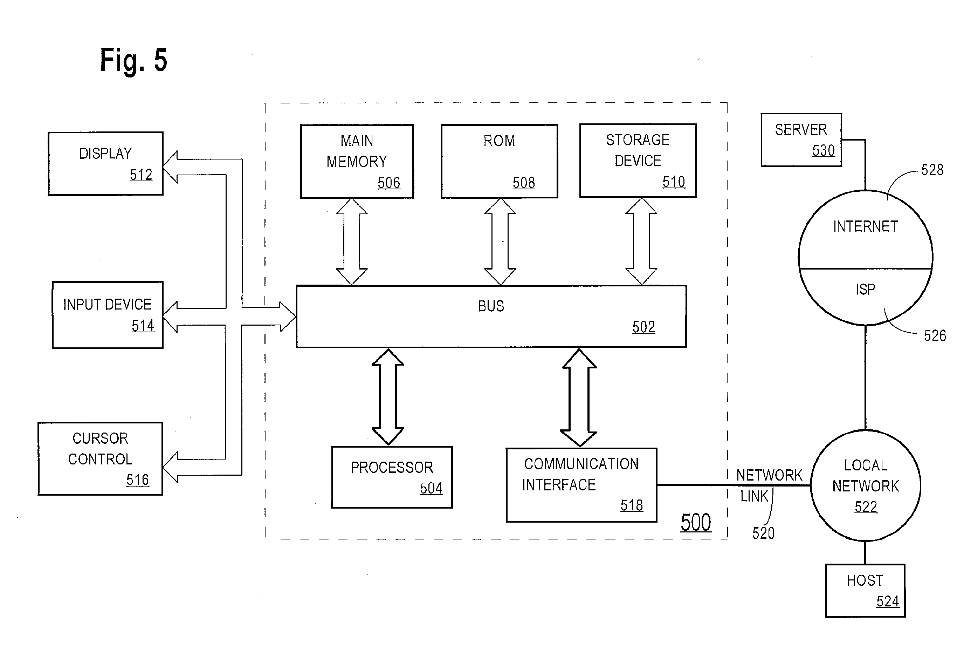

For example, FIG. 5 is a block diagram that illustrates a computer system 500. Computer system 500 includes a bus 502 or other communication mechanism for communicating information, and a hardware processor 504 coupled with bus 502 for processing information. Hardware processor 504 may be, for example, a general purpose microprocessor.

Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Such instructions, when stored in non-transitory storage media accessible to processor 504, render computer system 500 into a special-purpose machine that is customized to perform the operations specified in the instructions.

Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

Computer system 500 may implement the techniques described herein using customized hard-wired logic, one or more ASICs or FPGAs, firmware and/or program logic which in combination with the computer system causes or programs computer system 500 to be a special-purpose machine. According to one embodiment, the techniques herein are performed by computer system 500 in response to processor 504 executing one or more sequences of one or more instructions contained in main memory 506. Such instructions may be read into main memory 506 from another storage medium, such as storage device 510. Execution of the sequences of instructions contained in main memory 506 causes processor 504 to perform the process steps described herein. In alternative embodiments, hard-wired circuitry may be used in place of or in combination with software instructions.

The term "storage media" as used herein refers to any non-transitory media that store data and/or instructions that cause a machine to operation in a specific fashion. Such storage media may comprise non-volatile media and/or volatile media. Non-volatile media includes, for example, optical or magnetic disks, such as storage device 510. Volatile media includes dynamic memory, such as main memory 506. Common forms of storage media include, for example, a floppy disk, a flexible disk, hard disk, solid state drive, magnetic tape, or any other magnetic data storage medium, a CD-ROM, any other optical data storage medium, any physical medium with patterns of holes, a RAM, a PROM, and EPROM, a FLASH-EPROM, NVRAM, any other memory chip or cartridge.

Storage media is distinct from but may be used in conjunction with transmission media. Transmission media participates in transferring information between storage media. For example, transmission media includes coaxial cables, copper wire and fiber optics, including the wires that comprise bus 502. Transmission media can also take the form of acoustic or light waves, such as those generated during radio-wave and infra-red data communications.

Various forms of media may be involved in carrying one or more sequences of one or more instructions to processor 504 for execution. For example, the instructions may initially be carried on a magnetic disk or solid state drive of a remote computer. The remote computer can load the instructions into its dynamic memory and send the instructions over a telephone line using a modem. A modem local to computer system 500 can receive the data on the telephone line and use an infra-red transmitter to convert the data to an infra-red signal. An infra-red detector can receive the data carried in the infra-red signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card, cable modem, satellite modem, or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are example forms of transmission media.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518.

The received code may be executed by processor 504 as it is received, and/or stored in storage device 510, or other non-volatile storage for later execution.

### 6.0. EXTENSIONS AND ALTERNATIVES

In the foregoing specification, embodiments of the invention have been described with reference to numerous specific details that may vary from implementation to implementation. Thus, the sole and exclusive indicator of what is the invention, and is intended by the applicants to be the invention, is the set of claims that issue from this application, in the specific form in which such claims issue, including any subsequent correction. Any definitions expressly set forth herein for terms contained in such claims shall govern the meaning of such terms as used in the claims. Hence, no limitation, element, property, feature, advantage or attribute that is not expressly recited in a claim should limit the scope of such claim in any way. The specification and drawings are, accordingly, to be regarded in an illustrative rather than a restrictive sense.
In another embodiment there is disclosed a method comprising:
receiving, from one or more coupon providers, data describing coupon offers;
a server computer causing one or more approved sources to generate coupons for the coupon offers;
receiving, by the server computer, over a network, from a retailer that is different from the coupon provider, coupon redemption data indicating that the retailer accepted a particular coupon;
in response to receiving the coupon redemption data, the server computer determining whether the particular coupon was generated by one of the one or more approved sources, and further determining whether the server computer has previously caused any of one or more retailers to be compensated for accepting the particular coupon;
at least in response to determining that the particular coupon was generated by one of the one or more approved sources, and further in response to determining that the server computer has not previously caused any of the one or more retailers to be compensated for accepting the particular coupon, the server computer marking the particular coupon as redeemed, and causing the retailer to be credited for accepting the particular coupon;
wherein the method is performed by one or more computing devices.

Optionally, the method, wherein the particular coupon is a digital coupon.

Optionally, the method, wherein each coupon generated for a particular coupon offer comprises a different unique coupon identifier.

Optionally, the method, wherein the one or more approved sources include the coupon server.

Optionally, the method, wherein causing the one or more approved sources to generate coupons for the coupon offers comprises sending coupon data describing at least a particular coupon offer to the retailer, the method further comprising receiving a report from the retailer indicating that the retailer generated the particular coupon.

Optionally, the method, wherein causing the one or more approved sources to generate coupons for the coupon offers comprises saving the particular coupon to an account associated with a user identifier, wherein the account is accessible to the retailer during a transaction in which the user identifier is provided.

Optionally, the method, further comprises:
receiving, with the coupon redemption data, transaction information describing a transaction in which the retailer accepted the particular coupon;
the server computer verifying that the particular coupon is eligible for the transaction based on the data describing coupon offers that was received from the one or more coupon providers.

Optionally, the method, wherein causing the retailer to be credited for accepting the particular coupon comprises the server computer causing the retailer to receive payment from funds provided to one or more clearinghouses from the one or more coupon providers.

Optionally, the method, wherein the one or more clearinghouses includes a coupon distributor that operates the server computer.

Optionally, the method, wherein causing the retailer to be credited for accepting the particular coupon comprises the server computer generating a payment voucher for the retailer.

In another embodiment there is disclosed a method comprising:
a retail server computer receiving, from a coupon server that is different than the retail server, coupon data describing a coupon offer;
the retail server computer receiving input from a user selecting at least a particular item;
the retail server computer determining that the coupon offer is eligible for use by the user to purchase the particular item;
in response to the user selecting to purchase at least the particular item in a transaction, the retail server computer causing a digital coupon to be generated for the coupon offer by performing one of: generating the digital coupon based on the coupon data received from the coupon server, or sending a request configured to cause the coupon server to generate the digital coupon for the coupon offer;
the retail server computer applying the digital coupon to the transaction;
the retail server computer sending a request for compensation for the digital coupon to a clearinghouse, wherein the clearinghouse is different than the coupon server;
wherein the method is performed by one or more computing devices.

Optionally, the method, further comprises the retail server computer causing a plurality of digital coupons to be generated for the coupon offer, wherein each coupon generated for the coupon offer comprises a different unique coupon identifier.

Optionally, the method, further comprises:
the retail server computer sending a report to the coupon server indicating that the retail server generated the digital coupon.

Optionally, the method, wherein the report indicating that the retail server computer generated the digital coupon is the same as the request for compensation.

Optionally, the method, wherein the retail server computer does not provide the user with any information that would allow the user to present the digital coupon in other transactions.

Optionally, the method, wherein the coupon server is the clearinghouse.

Optionally, the method, further comprises the retail server computer sending a request to the coupon server to generate the digital coupon for the coupon offer.

Optionally, the method, further comprises:
the retail server computer receiving the user selection to purchase the particular item from a user device that is separate from the retail server computer;
the retail server computer sending a request to the user device configured to cause a coupon client executing on the user device to request that the coupon server generate the digital coupon for the coupon offer.

Optionally, the method, wherein the coupon client is a plug-in to web browser, wherein the user selection is received from the web browser, wherein the request to the device is embedded in a web page that the retail server sends to the web browser.

Optionally, the method, wherein the request to the device is also configured to cause the coupon client to send a unique device identifier to the coupon server with the request that the coupon server generate the digital coupon.

Optionally, the method, wherein the retail server computer determining that the coupon offer is eligible for use by the user for purchasing at least the particular item comprises the retail server computer determining that the user has not surpassed a distribution limit for the coupon offer, wherein the distribution limit is specified in the coupon data received from the coupon server.

Optionally, the method, wherein the retail server computer determining that the coupon offer is eligible for use by the user for purchasing at least the particular item comprises the retail server computer determining that the user has performed a prerequisite action for receiving access to the coupon offer.

Optionally, the method, wherein the retail server computer determines that the coupon offer is eligible for use and applies the digital coupon to the transaction without having received a request from the user identifying the coupon offer.

Optionally, the method, wherein retail server computer is operated by a retailer, wherein the coupon offer is provided by an entity other than the retailer.

Optionally, the method, wherein the particular item is a product or a service.

In another embodiment there is disclosed a method comprising:
receiving, at a client executing on a user device, from a retail server computer, an instruction to send to a coupon server a request to generate a digital coupon for a coupon offer;
wherein the coupon server is different than the retail server computer;
responsive to the instruction, the client sending to the coupon server the request to generate the digital coupon for the coupon offer;
wherein the request to generate the digital coupon includes a unique client identifier;
wherein the method is performed by one or more computing devices.

Optionally, the method, further comprises:
the client receiving from the coupon distribution server, in response to the request to generate the digital coupon, at least a unique coupon identifier that identifies the digital coupon;
the client transmitting the unique coupon identifier to the retail server computer.

Optionally, the method, further comprises the client calculating the unique client identifier based on at least one or more hardware identifiers for the user device.

Optionally, the method, wherein the client is a plugin to a web browser, wherein the instruction is embedded in code received at the web browser, from the retail server.

## Claims

1. A method comprising:
receiving, from one or more coupon providers, data describing coupon offers;
a server computer causing one or more approved sources to generate coupons for the coupon offers;
receiving, by the server computer, over a network, from a retailer that is different from the coupon provider, coupon redemption data indicating that the retailer accepted a particular coupon;
in response to receiving the coupon redemption data, the server computer determining whether the particular coupon was generated by one of the one or more approved sources, and further determining whether the server computer has previously caused any of one or more retailers to be compensated for accepting the particular coupon;
at least in response to determining that the particular coupon was generated by one of the one or more approved sources, and further in response to determining that the server computer has not previously caused any of the one or more retailers to be compensated for accepting the particular coupon, the server computer marking the particular coupon as redeemed, and causing the retailer to be credited for accepting the particular coupon;
wherein the method is performed by one or more computing devices.

2. The method of Claim 1, wherein causing the one or more approved sources to generate coupons for the coupon offers comprises at least one of: sending coupon data describing at least a particular coupon offer to the retailer, the method further comprising receiving a report from the retailer indicating that the retailer generated the particular coupon; or saving the particular coupon to an account associated with a user identifier, wherein the account is accessible to the retailer during a transaction in which the user identifier is provided.

3. The method of Claim 1, further comprising:
receiving, with the coupon redemption data, transaction information describing a transaction in which the retailer accepted the particular coupon;
the server computer verifying that the particular coupon is eligible for the transaction based on the data describing coupon offers that was received from the one or more coupon providers.

4. The method of Claim 1, wherein causing the retailer to be credited for accepting the particular coupon comprises at least one of: the server computer causing the retailer to receive payment from funds provided to one or more clearinghouses from the one or more coupon providers; or the server computer generating a payment voucher for the retailer.

5. A method comprising:
a retail server computer receiving, from a coupon server that is different than the retail server, coupon data describing a coupon offer;
the retail server computer receiving input from a user selecting at least a particular item;
the retail server computer determining that the coupon offer is eligible for use by the user to purchase the particular item;
in response to the user selecting to purchase at least the particular item in a transaction, the retail server computer causing a digital coupon to be generated for the coupon offer by performing one of: generating the digital coupon based on the coupon data received from the coupon server, or sending a request configured to cause the coupon server to generate the digital coupon for the coupon offer;
the retail server computer applying the digital coupon to the transaction;
the retail server computer sending a request for compensation for the digital coupon to a clearinghouse, wherein the clearinghouse is different than the coupon server;
wherein the method is performed by one or more computing devices.

6. The method of Claim 5, further comprising:
the retail server computer causing a plurality of digital coupons to be generated for the coupon offer, wherein each coupon generated for the coupon offer comprises a different unique coupon identifier.
the retail server computer sending a report to the coupon server indicating that the retail server generated the plurality of digital coupons.

7. The method of Claim 5, wherein the retail server computer does not provide the user with any information that would allow the user to present the digital coupon in other transactions.

8. The method of Claim 5, further comprising the retail server computer sending a request to the coupon server to generate the digital coupon for the coupon offer.

9. The method of Claim 5, further comprising:
the retail server computer receiving the user selection to purchase the particular item from a user device that is separate from the retail server computer;
the retail server computer sending a request to the user device configured to cause a coupon client executing on the user device to request that the coupon server generate the digital coupon for the coupon offer.

10. The method of Claim 9, wherein the coupon client is a plug-in to web browser, wherein the user selection is received from the web browser, wherein the request to the device is embedded in a web page that the retail server sends to the web browser.

11. The method of Claim 9, wherein the request to the device is also configured to cause the coupon client to send a unique device identifier to the coupon server with the request that the coupon server generate the digital coupon.

12. The method of Claim 5, wherein the retail server computer determining that the coupon offer is eligible for use by the user for purchasing at least the particular item comprises at least one of:
the retail server computer determining that the user has not surpassed a distribution limit for the coupon offer, wherein the distribution limit is specified in the coupon data received from the coupon server;
the retail server computer determining that the user has performed a prerequisite action for receiving access to the coupon offer.

13. The method of Claim 5, wherein the retail server computer determines that the coupon offer is eligible for use and applies the digital coupon to the transaction without having received a request from the user identifying the coupon offer.

14. A computer data processing system comprising:
a retail server executing on a first set of one or more computing devices, the retail server configured to conduct transactions with a client over a network; and
a coupon distribution server executing on a second set of one or more computing devices, the coupon distribution server configured to generate coupons for coupon offers that are applied to the transactions;
wherein the retail server is further configured to: identify a particular coupon offer to apply to a particular transaction with a particular client, instruct the particular client to request that the coupon distribution server generate a digital coupon for the particular offer, apply the digital coupon to the transaction, and send a unique identifier for the digital coupon to the coupon distribution server to request compensation for applying the digital coupon;
wherein the coupon distribution server is further configured to: generate a digital coupon, including the unique identifier, for the particular coupon offer in response to the request from the particular client, and provide compensation for the digital coupon upon determining that the unique identifier received from the retail server was generated by the coupon distribution server.

15. One or more non-transitory computer-readable media storing instructions that, when executed by one or more computing devices, cause performance of any one of the methods recited in Claims 1-13.
